# EUROPEAN PATENT APPLICATION

(11) **EP 3 696 638 A1**
(43) Date of publication of application: **19.08.2020**
(21) Application number: 19168514.8
(22) Date of filing: 10.04.2019
(51) Int. Cl.: G05B 19/418, G06Q 10/06

(54) **METHOD FOR FABRICATING OF A WIRE HARNESS ON A WIRE HARNESS ASSEMBLY LINE AND WIRE HARNESS ASSEMBLY LINE FOR FABRICATING OF A WIRE HARNESS**

(30) Priority: 13.02.2019 CN 201910115401
(71) Applicant: Schleuniger Holding AG, 3608 Thun (CH)
(72) Inventor: WEI, Liang, Tianjin, Tianjin 300222 (CN); PLÜSS, Chistoph, 3400 Burgdorf (CH); STIER, Martin, 50129 Bergheim (DE)
(74) Representative: Patentbüro Paul Rosenich AG

(57) **Abstract**

The invention refers to a method for fabricating of a wire harness (8) on a wire harness assembly line (11), comprising the steps of:
a) collecting a first takt time by a sensor means at a first work station (16),
b) collecting a first takt time by a sensor means at a second work station (26),
c) transmitting the said first takt times to a data processor (12),
d) calculating an average takt time of the said first takt times the work stations (16, 26) by using the transmitted data,
e) comparing the calculated average takt time of said work stations (16, 26),
f) adjusting the assembly process of the wire harness (8) based on the said comparison.

Further, the invention refers to a wire harness assembly line (11) for fabricating of a wire harness (8) for providing this method.

## Description

The invention refers to a method for fabricating of a wire harness on a wire harness assembly line according to claim 1 as well as to a wire harness assembly line for fabricating of a wire harness according to claim 12.

In general, a wire harness assembly line for fabricating of a wire harness comprises a supply line for work boards for sequentially feeding the work boards from one work station to the next work station. At each work station an operator assembles a plurality of subassemblies fed separately to the work space into a wiring harness on each work board.

An example of such a wire harness assembly line is shown by GB2276602A.

Disadvantageously at this known solution is that different takt times at each work station obstruct an efficient working.

Different solutions are known for checking the quality of the work provided on a work station by sensors, e. g., DE102016123976B3 or DE102011084786A1.

These solutions secure a high quality of the wire harnesses produced, but do not provide an improvement of efficiency of the wire harness assembly line.

Therefore, object of the present invention is to provide a method for fabricating of a wire harness on a wire harness assembly line which do not have at least one of the aforementioned disadvantages and mainly improve the performance of the wire harness assembly line while ensuring high quality of the wire harnesses fabricated. Further, it is the object of the present invention is to provide a wire harness assembly line for carrying out such a method.

These objects are solved by the features of the independent claims. Advantageously further developments are disclosed by the figures and by the claims dependent from the independent claims.

According to the invention a method for fabricating of a wire harness on a wire harness assembly line, wherein the wire harness assembly line comprises a first work station and at least a second work station, at least two boards movable along the wire harness assembly line with a line speed, at least one sensor means for collecting data from at least one of the work stations, at least one data processor for processing and comparing data collected by the at least one sensor means, comprising the steps of:
a) collecting a first takt time and preferably a second takt time by the at least one sensor means at the first work station,
b) collecting a first takt time and preferably a second takt time by the at least one sensor means at the at least second work station,
c) transmitting the said first takt times and preferably the said second takt times to the at least one data processor,
d) calculating an average takt time of the said first takt times and preferably of the said second takt times for each work station by using the transmitted data,
e) comparing the calculated average takt time of said work stations,
f) adjusting the assembly process based on the said comparison.

For each work station the effective takt times are collected and stored. In this sense, "takt time" means the time from beginning of the sub-assembling at one work station until to the end of this respective sub-assembling.

For measuring the takt time, e. g., an operator pushes a start bottom when starting with the work and pushes a stop bottom when finishing the work. The time between the two pushes corresponds to the respective takt time. Alternatively, the start and the end of the respective work is measured by optical sensors or electrical sensors.

Based on these collected values the wire harness assembly line or the instructions to the operators can be adjusted for balancing differences between the individual work stations of one wire harness assembly line. Thereby, the performance and the effectiveness will be improved.

The measured takt time can also be used to compare different operators with each other. Moreover, operators can be identified which - e. g., by respective training or promotion - finally are more efficient. At the end, the performance of the wire harness assembly line will be improved.

Advantageously, the calculated average takt time of said work stations is also compared with comparison data stored in the at least one data processor whereby historical data can be taken into account.

Preferably the said comparison data is the average takt time at least of the two work stations which are arranged adjacent to each other. Thereby the adjustment in-time directly influences the work stations and secure a balancing between these work stations.

Preferably said comparison data is an average takt time previously stored in a database whereby long-term monitoring can be taken into account. For an easy handling of the data the database is advantageously part of the at least one data processor.

Preferentially one of the work stations which has the longest average takt time is determined and the assembly process at least said work station is adjusted. When said work station is adjusted correctly, the takt time will be reduced. Thereby the average takt time of all work station is balanced and thereby the overall performance of the wire harness assembly line is increased.

Preferably the assembly process is adjusted automatically, based on the said comparison. E. g., the line speed is slightly increased or decreased by the control of the wire harness assembly line based on the measured and/or calculated data. Alternatively, the adjustment is made by the shift leader based on his analysis of the measured or compared data

Preferentially the work content of each work station of the wire harness assembly line is analysed and the assembly process is adapted, based on the analysed work content at the work stations. If an operator has a takt time at his work station which is faster than the takt time at another work station, single work steps may be shifted from the work station with the slower takt time to the work station with the faster takt time. Advantageously for an easy material handling, the work steps are shifted between neighbouring work stations.

Preferably the work content of each work station of the wire harness assembly line is analysed and the line speed of the wire harness assembly line is adjusted.

If the main part of the operators is all slower than the calculated average takt time, by decreasing the line speed the operators will be relieved. Afterwards, the line speed can be increased when the main part of, preferably all, operators are faster than the measured average takt time.

If the operators are all faster than the calculated average takt time, by increasing the line speed the efficiency of the wire harness assembly line will be increased also. Afterwards, the line speed can be decreased when some operators are too slow than the other operators.

Advantageously, each operator gets the information how his personal performance will be in comparison with the other operators at the same wire harness assembly line.

Preferentially the line speed is adjusted in real time whereby the performance will be guaranteed during the shift. Alternatively, the line speed is adjusted manually, e. g., based on analysed values.

Preferably data are displayed on an operator display of the wire harness assembly line whereby each operator gets a feedback from the wire harness assembly line what his performance is like.

For satisfying costumers wishes for flexible ordering production plans for the wire harness assembly are often changed during a production. In previous times a changed production plan has to be redistributed, re-printed and re-announced. With the operator display new production plans can be displayed directly to the operator and furthermore additional information can be provided to them. Thereby, the effectiveness of the wire harness assembly line will be improved, due to a reduction of time for providing the information. Moreover, it is secured that every operator has all information important for him directly in front of him.

Alternatively or additionally, data are displayed at a monitoring station whereby a shift leader or a manager gets the information about the status of each work station. A monitoring station may be a computer, a tablet, a smartphone or the like.

Preferentially data are displayed on a wire harness assembly line display, especially information about the wire harness assembly line are displayed. Thereby, for each wire harness assembly line the respective information is directly visible.

Preferably the material delivery is adjusted to one of said work stations based on the collected data. Especially, if an operator also provides single work steps additionally to his plan, more material will be used at this work station. Due to the information available the delivery can be adjusted for each work station and waiting time of the operator can be reduced.

A material shortage information can be shown in real-time to a storage. Based on the use of these information the storage can optimize the logistic route, whereby time and labour will be save comparing to other systems, e. g., to a "milk run" system.

Advantageously, the time for material delivery can be logged and shown at the work station each time the material is called. Thereby, the operator knows when he has the material after he called or he can call it more precisely just in time for his respective assembly work step.

Alternatively or additionally, the information is directly sent to a system, like a Manufacturing Execution System (MES), and a bill of material (BOM) of each work station is created. The material of each work station is monitored quantitatively and the delivery time of these materials is used to call material automatically to storage when the quantity of the material at the respective work station reach a defined limit.

Preferentially the pre-fabrication of the wire harness is adjusted, based on the average takt time of said work station and/or on the material delivery. If a pre-fabrication on the work board or an operator would be too slow than this pre-fabrication will be put away from said work station.

Preferably at least a part of the collected data are used for maintaining the wire harness assembly line, whereby the operational capability of the wire harness assembly line is under different condition is secured. More effectiveness results normally in more wear of the components of the work station and the whole wire harness assembly line (mean time to failure, MTTF). The mean time between failures (MTBF) can be adjusted accordingly. An active maintenance notice may be sent to the operator or his supervisor when components reach the limit of their lifetime or service life.

For collecting data and for monitoring a status, further kind of sensors can be used. As a non-exhaustive list are mentioned, light sensors for lights, turning sensors for motors or fans, temperature sensors for motors or gearboxes, etc.

Based on the information from each work station and/or from the wire harness assembly line proactive replacement can take place and unwanted business interruptions can be prevented. The business interruptions can be planed and placed at time slots with low impact of the production.

A part from the aforementioned data further data, e. g., machine or components information can be collected and used for an optimal maintenance.

A proactive maintenance notice may be sent to the operator or his supervisor when the parts working condition changes.

An inventive wire harness assembly line for fabricating of a wire harness comprises a first work station and at least a second work station, at least two work boards movable along the wire harness assembly line equipment with a line speed, at least one sensor means for collecting data from at least one of the work stations, at least one data processor for processing and comparing data collected by the at least one sensor means. Each work station is provided with or connected to at least one sensor means.

Such a wire harness assembly line allows a balancing between the work stations and thereby an increase of the performance of the wire harness assembly line.

The at least one data processor can be an integrated part of the wire harness assembly line or a separate, e. g., external station comprising such at least one data processor, or a cloud-solution.

Preferably the at least one sensor means comprises a camera which allows a picture-based monitoring of the work steps provided at each work station. Thereby, the quality of the work can be checked. Furthermore, the moments of the start and of the end of each work step can be determined by the camera. Additionally, wrong work steps can be recorded and respective alarms, visual or acoustical, can be generated. The recorded pictures can also be used for education or evaluation of the operators.

Preferentially an operator identifying means is provided which secure that the right operator is working at the work station. Before the operator starts working, he has to log on the work station. The identifying means comprises, e. g., card scanners or readers, hand or finger scanners, keyboards for input of codes, cameras for face detection or the like. The operator identifying means may also be used as an operator attendance control.

With the identification of the operator the control of the wire harness assembly line knows which operator is at the moment working on which work station. By shifting or adjusting the operators along the wire harness assembly line the performance of the wire harness assembly line may be further improved.

Further advantages, features and details of the invention results from the description in the following which discloses the invention in examples taking the figures into account.

The list of reference signs is like the technical content of the claims and the figures part of the disclosure. The figures are described coherent and comprehensive. Same reference signs mean same components, reference signs having different indices indicate components having the same function or similar components.

The figures show:
- Fig. 1: An inventive wire harness assembly line in a perspective view,
- Fig. 2: a detail A of figure 1,
- Fig. 3: a display content according to figure 2,
- Fig. 4: a display content of the main display of the wire harness assembly line according to figure 1, and
- Fig. 5: a further display content of the main display of the wire harness assembly line according to figure 1.

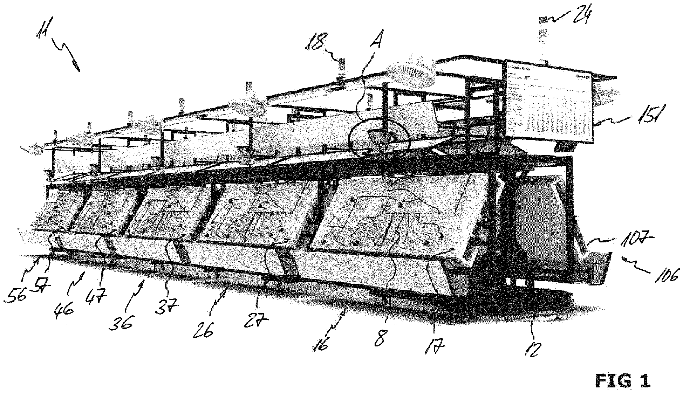

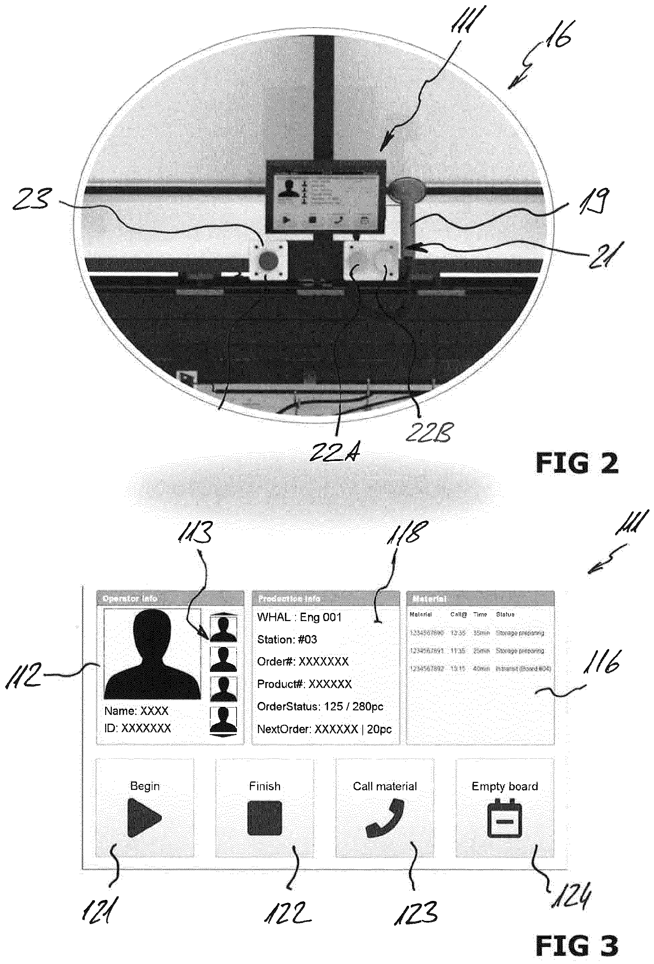

The wire harness assembly line 11 for fabricating of a wire harness 8 according to figures 1 and 2 comprises multiple work stations 16, 26, 36, 46, 56, 106. On the opposite side of the picture according to figure 1 further work station are present, so that this wire harness assembly line 11 comprises in total of ten work stations 16, 26, 36, 46, 56, 106. of which four are hidden in figure 1.

A defined sub-assembly of the wire harness 8 will be provided at each work station 16, 26, 36, 46, 56, 106. The assembly of the assembly of the wire harness 8 starts at the work station 16 and ends on work station 106.

At each work station 16, 26, 36, 46, 56, 106 a work board 17, 27, 37, 47, 57, 107 is arranged on which the assembly of the wire harness 8 takes place. The work boards 17, 27, 37, 47, 57, 107 move along the wire harness assembly line 11 with a continuous line speed from one work station 16, 26, 36, 46, 56, 106 to the next work station 16, 26, 36, 46, 56, 106.

In the following, only work station 16 is described in detail. The other work stations 26, 36, 46, 56, 106 corresponds in their embodiment to this work station 16 and therefore are not described separately again. Therefore, the following description applies for all work stations accordingly or mutatis mutandis, respectively.

As a first sensor for collecting a first takt time and preferably a second takt time from the work station 16 a switch 21 is provided which comprises a START-bottom 22A and a STOP-bottom 22B. The operator (not shown) pushes the START-bottom 22A when starting his sub-assembly and pushes the STOP-bottom 22B when he finished his sub-assembly. The time between the two pushes is measured and defines the effective takt time at this work station 16.

The first takt times and preferably the second takt times from all work stations 16, 26, 36, 46, 56, 106 is transmitted to a data processor 12 of the wire harness assembly line 11. In the data processor 12 an average takt time of the said first takt times and preferably of the said second takt times for each work station is calculated by using the transmitted data. The calculated average takt time of said work stations is compared with the comparison data stored in the data processor 12. Based on the said comparison the assembly process of the wire harness is adjusted.

A camera 19 is provided at the work station 16 as a further sensor means. The camera 19 can be used also for collecting a first takt time and preferably a second takt time from the work station 16. Furthermore, the camera 19 is used for monitoring the work at each work station 16, 26, 36, 46, 56, 106. This guarantees a continuous quality monitoring of each sub-assembly. Failures in assembling are indicated directly and not just with the end control. Thereby, the scrap in fabrication is reduced.

The camera 19 can also be used as an operator identifying means for identification of the operator.

A further switch 23 with an EMERGENCY-STOP-bottom is provided at the work station 16 that the operator can stop the movement of the work boards 17, 27, 37, 47, 57, 107 in an emergency case.

A signal device 18 is provided at the work station 16 which allows to show different situations visually. In the following some examples - which are not mandatory in this way and which can be also varying - of visual information are described.

E. g, the signal device 18 shows a yellow light, if the operator is working. The signal device 18 shows a green light, if the operator has finished his working or if everything is working well at the respective work station 16. The signal device 18 shows a red light, if a failure in fabricating was monitored or if the EMERGENCY-STOP-bottom of the further switch 23 was pushed. Furthermore, the lights can be animated to differentiate between different status of the work station 16.

The work station 16 is also provided with an operator display 111 which is advantageously a touch screen. Figure 3 shows the details of the displayed data.

In the region 112 on the upper right-hand side of the screen of the operator display 111 the information of the operator is displayed. On the right of this region 112 drop down fields 113 are present for selecting an operator stored in a database. This possibility for selection forms an operator identifying means.

In the region 116 on the upper left-hand side of the screen of the operator display 111 the information about material and the status, e. g., of the preparing of material, are displayed.

In the region 118 between the regions 112 and 116 production information is displayed.

By the information displayed an operator has always an overview of data which are relevant for him. If a production plan changes, this information can be displayed on the operator display 111 and the operator will directly adjust his working steps according to the new production plan.

In the region along the lower edge of the operator display 111 four touchable signs 121 to 124 are displayed. In this embodiment from the left to the right a BEGIN-Sign 121 and a FINISH-Sign 122 are present which may be used instead of START-bottom 22A and STOP-bottom 22B of switch 21. Furthermore, a CALL-MATERIAL-Sign 123 is present which will order Material from the storage, whereby advantageously actual information of the effective situation at the work station 16 is also taken into account by the system. Far right an EMPTY-BOARD-Sign 124 is present which order a new board after the operator has finished all his work steps as planned according to the production plan.

All actions on these signs 121 to 124 can be collected and also used for adjusting of the wire harness assembly line 11.

The wire harness assembly line 11 is also provided with a main signal device 24 showing visually by different colours or by different light animations the status of the wire harness assembly line 11.

The wire harness assembly line 11 also comprises a wire harness assembly line display 151, especially for displaying information about the wire harness assembly line 11. Of course, this information may also be sent and displayed at a monitoring station.

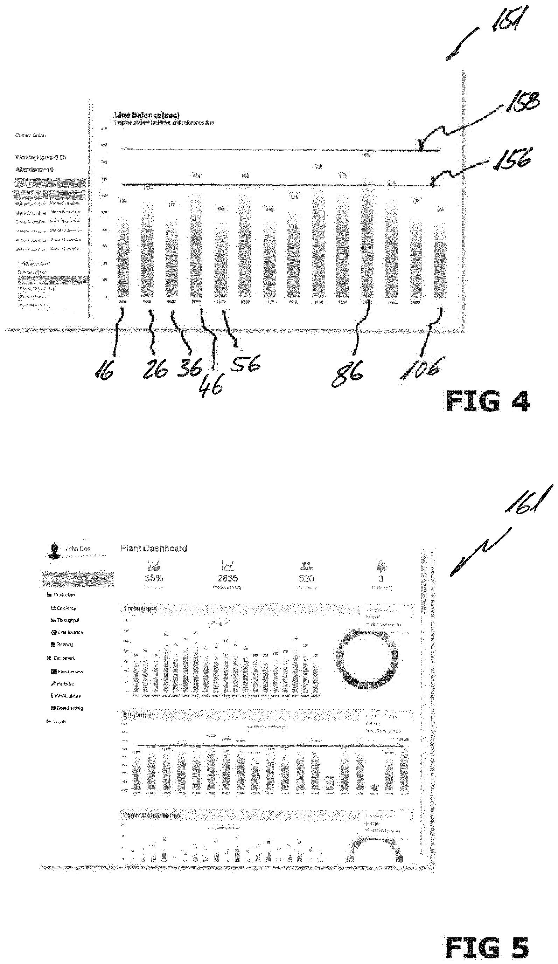

Figure 4 shows a display on the wire harness assembly line display 151 about the so called "line balance". The collected data of each work station 16, 26, 36, 46, 56, 106 are displayed as columns and the respective average value is indicated. Furthermore, a first line showing a first level 156 and a second line showing a second level158 are present. The first level 156 indicates the calculated expected time according to the respective production plan. The second level 158 indicates the calculated maximum tolerable time according to the respective production plan.

As can be seen by figure 4 most of the operators, in this example the operators at work station 16, 36, 56 and 106, are faster than the time for fabrication as calculated by the system. E. g., the operator at the work station 46 works inside the calculated range. However, as also can be seen by this figure 4 that the operator at work station 86 is the slowest of all operators and exceeds the calculated maximum tolerable time. Thereby, work station 86 is recognized as work station having the longest average takt time.

Based on this information respective adjustments maybe set. E. g., the operator at work station 86 will be replaced. Alternatively, some work steps would be shift to another operator, in this example to the operator at work station 56. In other words, the work content will be adapted between the different operators or work stations, respectively. If one of this adjustment works the maximum values will be levelled what can be recognized from the display of the value of the columns which should be between the first level 156 and the second level 158.

If the maximum values of all work stations 16, 26, 36, 46, 56, 86 and 106 are below the level indicated by the first level 156 the line speed can be increased whereby the increasement advantageously will be made slightly.

If the maximum values of all work stations 16, 26, 36, 46, 56, 86 and 106 are above the level indicated by the second level 156 the line speed can be decreased whereby the decreasement advantageously will be made slightly.

All adjustments or adaptions can be processed automatically by the system or the control of the wire harness assembly line 11 or can be also done manually, e. g., by the shift leader. Furthermore, all adjustments or adaptions can be made also in real time.

Figure 5 shows a plant dashboard display 161 of a plant dashboard showing the data from different wire harness assembly lines and the information about the performance of the whole plant, including analysed data. For these analyses the data of the inventive wire harness assembly line 11 and the respective method are used.

The display 161 may be presented on a wire harness assembly line display 151 or at a monitoring station, also remote from the plant. All adjustments or adaptions can also be made from aboard or remote, respectively. Well known techniques like WLAN or BLUETOOTH® may be used therefore.

### List of Reference Signs

- 11: Wire harness assembly line
- 12: Data processor

- 16: Work station
- 17: Work board
- 18: Signal device of 16
- 19: Camera
- 21: Switch
- 22A: START-bottom
- 22B: STOP-bottom
- 23: EMERGENCY-STOP-bottom
- 24: Signal device of 11

- 26: Work station
- 27: Work board

- 36: Work station
- 37: Work board

- 46: Work station
- 47: Work board

- 56: Work station
- 57: Work board

- 86: Work station

- 106: Work station
- 107: Work board
- 111: Operator display
- 112: Region
- 113: Drop down fields
- 116: Region
- 118: Region
- 121: BEGIN-Sign
- 122: FINISH-Sign
- 123: CALL-MATERIAL-Sign
- 124: EMPTY-BOARD-Sign

- 151: Wire harness assembly line display
- 156: First level
- 158: Second level

- 161: Plant dashboard display

## Claims

1. Method for fabricating of a wire harness (8) on a wire harness assembly line (11), the wire harness assembly line (11) comprises a first work station (16) and at least a second work station (26, 36, 46, 56, 106),
at least two work boards (17, 27, 37, 47, 57, 107) movable along the wire harness assembly line (11) with a line speed,
at least one sensor means (19, 21) for collecting data from at least one of the work stations (16, 26, 36, 46, 56, 106),
at least one data processor (12) for processing and comparing data collected by the at least one sensor means (19, 21), comprising the steps of:
a) collecting a first takt time and preferably a second takt time by the at least one sensor means (19, 21) at the first work station (16),
b) collecting a first takt time and preferably a second takt time by the at least one sensor means at the at least second work station (26, 36, 46, 56, 106),
c) transmitting the said first takt times and preferably the said second takt times to the at least one data processor (12),
d) calculating an average takt time of the said first takt times and preferably of the said second takt times for each work station (16, 26, 36, 46, 56, 106) by using the transmitted data,
e) comparing the calculated average takt time of said work stations (16, 26, 36, 46, 56, 106), advantageously with comparison data stored in the at least one data processor (12),
f) adjusting the assembly process of the wire harness (8) based on the said comparison.

2. Method according to claim 1, **characterized in that** the said comparison data is the average takt time at least of the two adjacent work station (16, 26, 36, 46, 56, 106) or an average takt time previously stored in a database.

3. Method according to claim 1 or 2, **characterized by**
determine one of the work stations having the longest average takt time, and
adjusting the assembly process at least said work station (16, 26, 36, 46, 56, 106).

4. Method according to one of the claims 1 to 3, **characterized by** adjusting the assembly process automatically, based on the said comparison.

5. Method according to one of the claims 1 to 4, **characterized by** analysing the work content of each work station (16, 26, 36, 46, 56, 106) of the wire harness assembly line (11) and
adapting the assembly process, based on the analysed work content at the work stations (16, 26, 36, 46, 56, 106).

6. Method according to one of the claims 1 to 4, **characterized by** analysing the work content of each work station (16, 26, 36, 46, 56, 106) of the wire harness assembly line (11) and
adjusting the line speed of the wire harness assembly line (11).

7. Method according to claim 6, **characterized by** adjusting the line speed in real time or manually.

8. Method according to one of the claims 1 to 7, **characterized by** displaying data on an operator display (111) of the wire harness assembly line (11) and/or at a monitoring station.

9. Method according to one of the claims 1 to 8, **characterized by** displaying data on a wire harness assembly line display (151), especially information about the wire harness assembly line (11).

10. Method according to one of the claims 1 to 9, **characterized by** adjusting the material delivery to one of said work stations (16, 26, 36, 46, 56, 106).

11. Method according to claim 10, **characterized by** adjusting the pre-fabrication of the wire harness (8), based on the average takt time of said work station (16, 26, 36, 46, 56, 106) and/or on the material delivery.

12. Method according to one of the claims 1 to 11, **characterized by** using at least a part of the collected data for maintaining the wire harness assembly line (11).

13. Wire harness assembly line for fabricating of a wire harness (8), especially for providing the method according to one of the claims 1 to 12, comprises
a first work station (16) and at least a second work station (26, 36, 46, 56, 106),
at least two work boards (17, 27, 37, 47, 57, 107) movable along the wire harness assembly line (11) with a line speed,
at least one sensor means (19, 21) for collecting a first takt time and preferably a second takt time from at least one of the work stations (16, 26, 36, 46, 56, 106),
at least one data processor (12) for processing and comparing data collected by the at least one sensor means (19, 21), **characterized in that** each work station (16, 26, 36, 46, 56, 106) is provided with or connected to at least one sensor means (19, 21).

14. Wire harness assembly line according to claim 13, **characterized in that** the at least one sensor means (19) comprises a camera.

15. Wire harness assembly line according to claim 13 or 14, **characterized by** an operator identifying means (19).
